# FASCICULE DE BREVET EUROPEEN

(11) **EP 1 562 762 B1**
(45) Date de publication et mention de la délivrance du brevet: **06.09.2006**
(21) Numéro de dépôt: 03779942.6
(22) Date de dépôt: 17.11.2003
(51) Int. Cl.: B60C 23/04, G01P 13/04

(54) **DISPOSITIF DE DETECTION DE LA POSITION D'UNE ROUE DE VEHICULE**
VORRICHTUNG ZUR POSITIONSBESTIMMUNG EINES FAHRZEUGRADES
DEVICE FOR DETECTING THE POSITION OF A VEHICLE WHEEL

(30) Priorité: 22.11.2002 FR 0214632
(43) Date de publication de la demande: 17.08.2005
(73) Titulaire: Siemens VDO Automotive, 31036 Toulouse Cedex 1 (FR)
(72) Inventeur: PIERBON, Michel, F-31820 Pibrac (FR)
(86) Numéro de dépôt international: PCT/EP2003/012805
(87) Numéro de publication internationale: WO 2004/048131

(56) Documents cités:
- EP-A- 0 760 299
- WO-A-00/34062
- FR-A- 2 815 119
- US-B1- 6 204 758

## Description

La présente invention concerne un dispositif de détection de la position d'une roue d'un véhicule. Un tel dispositif est notamment destiné à être utilisé dans un système de surveillance de la pression des pneus d'un véhicule automobile, connu par example du document US 6,204,758 B1.

Certains véhicules automobiles sont maintenant équipés d'un dispositif permettant au conducteur de surveiller la pression de ses pneumatiques afin de détecter notamment une crevaison. Chaque roue d'un tel véhicule est alors équipée d'un capteur de pression disposé à l'intérieur du pneumatique. A chaque capteur est associé un émetteur permettant d'envoyer les mesures de pression effectuées vers un dispositif de commande et de gestion se trouvant dans le véhicule. Lorsqu'une information est envoyée à l'unité centrale, il convient de savoir de quel capteur elle provient afin, qu'en cas de problème, le conducteur puisse être informé de la roue au niveau de laquelle se situe le problème.

Une façon de localiser les roues consiste à déterminer d'une part si le signal est reçu d'une roue droite ou gauche et d'autre part à déterminer si ce signal provient d'une roue avant ou arrière.

La présente invention concerne le problème de la localisation droite/gauche d'une roue d'un véhicule. Le document EP-0 760 299 propose de résoudre ce problème en mettant en oeuvre un capteur constitué d'un commutateur roulant. Une bille disposée à l'intérieur de ce commutateur roulant permet de déterminer le sens de rotation d'une roue associée. Sachant alors si la voiture roule en marche avant ou en marche arrière, il est possible de déterminer si la roue se trouve à droite ou à gauche du véhicule.

Ce dispositif, en partie mécanique, peut se gripper. En outre, à partir d'une vitesse relativement faible, la bille est plaquée par la force centrifuge contre la paroi du commutateur roulant et ne bouge plus, ne donnant donc ainsi plus aucune indication. La mesure du sens de rotation doit donc se faire dans les premières secondes de roulage du véhicule.

La présente invention a pour but de fournir un nouveau dispositif permettant de réaliser la localisation droite/gauche d'une roue de façon autonome, c'est-à-dire sans qu'il soit nécessaire d'échanger des informations avec le véhicule pour pouvoir déterminer la position de la roue.

A cet effet, elle propose un dispositif de détection de la position d'une roue d'un véhicule, notamment un véhicule équipé d'un système de surveillance de la pression de ses pneumatiques.

Selon l'invention, ce dispositif de détection comporte des premiers et des seconds moyens capables de mesurer une accélération dans une direction présentant une composante dans un plan vertical, et les composantes dans le plan vertical des directions de mesure des premiers et seconds moyens de mesure présentent un décalage angulaire distinct de 0° et de 180°.

Lorsque la roue à laquelle sont associés ces moyens capables de mesurer une accélération tourne, ces moyens, appelés par la suite accéléromètres dans un souci de simplification, mesurent, dans le plan vertical, une accélération présentant d'une part une composante continue correspondant à l'accélération centripète engendrée par la rotation de la roue et d'autre part une composante variable correspondant à l'attraction terrestre. Les directions de mesure des accéléromètres présentant des directions décalées angulairement dans le plan vertical, un déphasage apparaîtra au niveau de la composante variable (sinusoïdalement) des mesures faites par les accéléromètres. En fonction du déphasage mesuré, qui en valeur absolue correspond au décalage angulaire entre les directions de mesure, il est possible de déterminer le sens de rotation de la roue associée. Si l'on connaît alors le sens de marche du véhicule, il est possible de déterminer si la roue associée aux accéléromètres se trouve à la droite ou à la gauche du véhicule.

Les directions de mesure des premiers et seconds moyens de mesure se trouvent de préférence toutes deux dans un plan vertical. De cette manière, les signaux mesurés par les accéléromètres ne sont pas atténués et servent tout entier à la détermination de la position de la roue.

Pour une meilleure exploitation des signaux fournis par les accéléromètres, le décalage angulaire dans le plan vertical des première et seconde directions de mesure est compris entre 30° et 150°. On évite de la sorte d'avoir des déphasages trop proches de 0° (ou 180°).

Les premiers et seconds moyens capables de mesurer une accélération sont par exemple des capteurs de chocs. Un tel capteur est généralement un transducteur intégrant un élément réalisé dans une céramique piézoélectrique placé dans un boîtier rigide. L'accélération subie par le capteur agit sur l'élément piézoélectrique pour fournir un signal électrique. Des électrodes disposées aux extrémités de l'élément piézoélectrique permettent alors de mesurer la différence de potentiel y apparaissant.

Dans une forme de réalisation préférée, les premiers et seconds moyens capables de mesurer une accélération sont disposés sur un même support.

La présente invention concerne également un capteur de pression d'un système de surveillance de la pression de pneumatiques comportant une plaquette de circuit intégré portant divers composants électroniques pour la mesure d'une pression et l'envoi d'informations par ondes électromagnétiques. Selon l'invention, ce capteur comporte en outre un détecteur de position tel que décrit ci-dessus.

Avantageusement, les premiers et seconds moyens capables de mesurer une accélération du dispositif de détection sont montés sur la plaquette de circuit imprimé du capteur. Le dispositif de détection selon l'invention est alors parfaitement intégré au capteur et au système de surveillance de la pression des pneumatiques. L'information concernant la localisation de la roue peut ainsi être directement transmise au capteur de pression.

La présente invention propose aussi un procédé de détection de la position droite/gauche d'une roue d'un véhicule. Ce procédé comporte les étapes suivantes :
- mesure d'une première et d'une seconde accélération, chacune dans une direction présentant une composante sur un plan vertical, les composantes sur le plan vertical des directions présentant un décalage angulaire,
- calcul du déphasage entre les signaux correspondants aux deux accélérations mesurées,
- détermination en fonction du déphasage du sens de rotation de la roue, et
- détermination de la localisation de la roue par rapport au véhicule, le sens de marche du véhicule étant connu par ailleurs.

De même qu'indiqué précédemment pour le dispositif de détection, les directions de mesure sont disposées de préférence dans un plan vertical.

Dans une forme de réalisation avantageuse, permettant une localisation droite/gauche sans aucune information extérieure, les mesures ne sont réalisées que lorsque le véhicule roule à une vitesse minimale prédéterminée, étant supposé alors que le véhicule roule en marche avant. La vitesse du véhicule étant proportionnelle à l'accélération centripète subie au niveau du dispositif de détection selon l'invention, ce dispositif peut estimer la vitesse du véhicule pour ainsi déterminer le moment où il peut réaliser la localisation de la roue.

Des détails et avantages de l'invention ressortiront mieux de la description qui suit, faite en référence au dessin schématique annexé sur lequel :
La figure 1 montre schématiquement un dispositif de détection de la position droite/gauche disposé sur une roue, et
La figure 2 montre très schématiquement en perspective un capteur de pression équipé d'un dispositif selon l'invention.

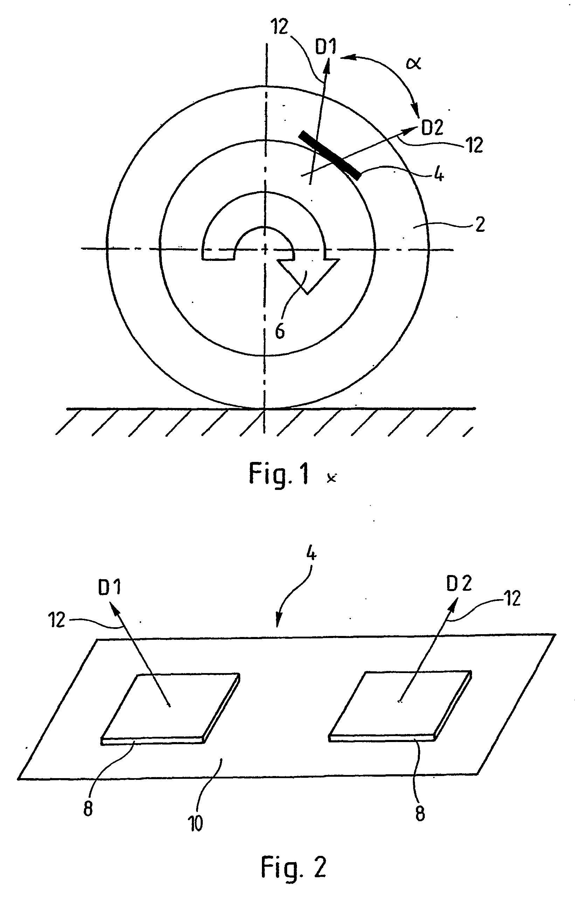

La figure 1 montre très schématiquement une roue 2 droite d'un véhicule équipée d'un dispositif de détection 4 selon la présente invention. L'échelle entre la roue 2 et le dispositif de détection 4 n'est pas respectée. On suppose que cette roue 2 tourne dans le sens indiqué par la flèche 6 et que le véhicule correspondant se déplace en marche avant.

La roue 2 est une roue droite classique d'un véhicule. Ce dernier est équipé d'un système de surveillance de la pression des pneus. Cette roue 2 comporte donc également un capteur de pression associé au dispositif de détection 4.

Le dispositif de détection 4 comporte deux accéléromètres 8 montés parallèlement l'un par rapport à l'autre sur un support 10. Ce dernier est par exemple la plaquette de circuit imprimé (ou en anglais PCB pour Printed Circuit Board) du capteur de pression placé dans le pneumatique associé à la roue 2. Ce circuit imprimé porte le capteur de pression et l'électronique associée à celui-ci. Un tel capteur de pression est connu de l'homme du métier et n'a pas besoin d'être décrit plus en détails pour la présente invention.

Chaque accélérateur 8 est par exemple un capteur de chocs qui comporte deux électrodes et fournit au niveau de ses électrodes une différence de potentiel qui est proportionnelle à l'accélération subie par le capteur. On peut utiliser ici un capteur de chocs tels ceux déjà utilisés dans l'industrie automobile pour le déclenchement de coussins gonflables connus sous la marque AIRBAG. On peut citer ici par exemple un capteur de choc commercialisé par la Société muRata sous la marque PIEZOTITE et portant la référence PKGS-00RA. Un tel capteur est utilisé pour le déclenchement de coussins gonflables et doit donc, pour des raisons évidentes de sécurité, répondre à des normes très sévères. Il est possible d'utiliser ici des capteurs du même type mais d'un prix de revient moins élevé étant donné que les exigences en terme de sécurité sont bien moindres dans la présente application que dans un coussin gonflable.

Un tel accéléromètre se présente par exemple sous la forme d'un parallélépipède. Le capteur de chocs dont la référence a été mentionnée ci-dessus présente une épaisseur d'environ 1,5 mm, une largeur d'environ 2,8 mm pour une longueur d'environ 6,4 mm. Ces accéléromètres 8 sont disposés à plat sur leur support 10 et sont orientés parallèlement l'un à l'autre. Toutefois, ces accéléromètres sont choisis de telle manière qu'ils mesurent chacun l'accélération subie par le support 10 dans des directions distinctes faisant entre elles un angle différent de 0 et 180°. Ces directions sont choisies de préférence pour se trouver dans un plan vertical de la position de la roue 2. Les directions de mesure de l'accélération sont représentées sur la figure 1 par des flèches 12. Chacune de ces flèches indique la direction de mesure d'un accéléromètre 8. Ces deux directions font entres elles un angle α. Dans le cas représenté au dessin, cet angle α vaut environ 60°. Cet angle peut prendre des valeurs dans un relativement grand intervalle. On choisit de préférence des valeurs ni trop proches de 0°, ni trop proches de 180°. De préférence, α prendra une valeur comprise entre 30 et 150°.

L'accélération mesurée par chaque accéléromètre 8 présente deux composantes. Une première composante, continue, est due à la force centripète tandis que la seconde composante, variable, est due à l'attraction terrestre. La première composante, continue, est proportionnelle à la vitesse de rotation de la roue 2 et donc à la vitesse du véhicule. La seconde composante varie sinusoïdalement. En effet, selon la position de l'accéléromètre 8 par rapport à la roue, celui-ci voit une accélération variant entre -1G (= 9,81 m/s²) et 1 G. Seule la composante variable est utilisée pour détecter le sens de rotation de la roue 2.

La localisation de la roue se fait en marche avant. On peut alors par exemple réaliser la détection uniquement lorsque le véhicule a atteint une vitesse prédéterminée, par exemple 40 ou 50 km/h. On suppose alors, ce qui apparaît comme étant raisonnable, que le véhicule ne se déplace pas en marche arrière à une telle vitesse. Il est également possible de détecter différemment si le véhicule roule en marche avant ou en marche arrière. Dans le cas d'un véhicule équipé d'une boîte automatique, la position du sélecteur de vitesses permet de fournir l'information. Dans un autre type de véhicule, un contacteur est généralement prévu pour détecter l'enclenchement de la marche arrière et commander l'allumage de feux de recul. Ce contacteur peut donc être également utilisé pour déterminer si le véhicule roule en marche avant ou en marche arrière.

Les signaux issus des deux accéléromètres 8 sont déphasés, en valeur absolue, de l'angle α. La détection du sens de rotation de la roue se fait en analysant le déphasage entre les signaux issus de chacun des accéléromètres. Si la composante variable du signal correspondant à la direction D1 (cf figure 1) est en retard sur la composante variable du signal issu de l'accéléromètre correspondant à la direction D2, alors la roue tourne dans le sens de la flèche 6. Dans la mesure où le véhicule roule en marche avant, cela signifie que la roue 2 est une roue droite. Dans le cas contraire (composante correspondant à D1 en avance sur D2), le véhicule roulant toujours en marche avant, la roue serait une roue gauche.

En résumé, dans une forme de réalisation selon l'invention, la détection de la position droite/gauche d'une roue 2 sur le véhicule se fait à partir d'une vitesse minimale pour laquelle on suppose que le véhicule roule en marche avant. Les roues montées à gauche de ce véhicule tournent dans le sens inverse de celles montées du côté droit. Le dispositif de détection 4 selon l'invention permet de déterminer le sens de rotation de chaque roue. L'information concernant le positionnement (droite/gauche) de la roue étant disponible au niveau de chaque roue, cette information peut être transmise vers le véhicule, plus précisément le boîtier de gestion du système de surveillance de la pression des pneus, en même temps que sont envoyées les informations concernant les mesures de pression réalisées.

Un capteur de pression de pneus intégrant un dispositif de détection selon l'invention est monté à l'intérieur d'un pneumatique de roue, indique lui-même de façon autonome s'il se trouve dans une roue montée à gauche ou à droite du véhicule. Cette information peut être transmise par ondes radio. Cette voie de communication est déjà utilisée pour la transmission de la pression régnant à l'intérieur du pneumatique. Ainsi, la localisation de la roue est possible sans élément extérieur à celle-ci.

La présente invention ne se limite pas à la forme de réalisation préférentielle décrite ci-dessus à titre d'exemples non limitatifs, ni aux variantes suggérées. Elle concerne également toutes les variantes à la portée de l'homme du métier dans le cadre des revendications ci-après.

Ainsi, par exemple, la localisation des roues du véhicule peut se faire à tout moment et non pas seulement lorsque le véhicule a atteint une vitesse minimale. Comme déjà indiqué, les accéléromètres peuvent être différents de la référence mentionnée il suffit de disposer d'un capteur permettant de mesurer une accélération dans une direction donnée.

Pour faciliter l'exploitation du signal fournit par les accéléromètres, les directions de mesure d'accélération de ceux-ci se trouvent de préférence dans un plan vertical. Toutefois, il suffit que la mesure de l'accélération, pour chaque accéléromètre, se fasse dans une direction présentant une composante verticale.

## Revendications

1. Dispositif de détection de la position d'une roue (2) d'un véhicule, notamment un véhicule équipé d'un système de surveillance de la pression de ses pneumatiques, **caractérisé en ce qu'**il comporte des premiers et des seconds moyens (8) capables de mesurer une accélération dans une direction (D1, D2) présentant une composante dans un plan vertical, et **en ce que** les composantes dans le plan vertical des directions de mesure des premiers et seconds moyens de mesure présentent un décalage angulaire (α) distinct de 0° et de 180°.

2. Dispositif de détection selon la revendication 1, **caractérisé en ce que** les directions de mesure (D1, D2) des premiers et seconds moyens de mesure se trouvent toutes deux dans un plan vertical.

3. Dispositif de détection selon l'une des revendications 1 ou 2, **caractérisé en ce que** le décalage angulaire (α) dans le plan vertical des première et seconde directions de mesure (D1, D2) est compris entre 30° et 150°.

4. Dispositif de détection selon l'une des revendications 1 à 3, **caractérisé en ce que** les premiers et seconds moyens capables de mesurer une accélération sont des capteurs de chocs (8).

5. Dispositif de détection selon l'une des revendications 1 à 4, **caractérisé en ce que** les premiers et seconds moyens capables de mesurer une accélération sont disposés sur un même support (10).

6. Capteur de pression d'un système de surveillance de la pression de pneumatiques comportant une plaquette de circuit intégré (10) portant divers composants électroniques pour la mesure d'une pression et l'envoi d'informations par ondes électromagnétiques, **caractérisé en ce qu'**il comporte en outre un détecteur de position (4) selon l'une des revendications 1 à 5.

7. Capteur de pression selon la revendication 6, **caractérisé en ce que** les premiers et seconds moyens (8) capables de mesurer une accélération du dispositif de détection sont montés sur la plaquette de circuit imprimé (10) du capteur.

8. Procédé de détection de la position droite/gauche d'une roue d'un véhicule, **caractérisé en ce qu'**il comporte les étapes suivantes :
- mesure d'une première et d'une seconde accélération, chacune dans une direction présentant une composante sur un plan vertical, les composantes sur le plan vertical des directions présentant un décalage angulaire,
- calcul du déphasage entre les signaux correspondants aux deux accélérations mesurées,
- détermination en fonction du déphasage du sens de rotation de la roue, et
- détermination de la localisation de la roue par rapport au véhicule, le sens de marche du véhicule étant connu par ailleurs.

9. Procédé de détection selon la revendication 8, **caractérisé en ce que** les directions de mesures sont disposées dans un plan vertical.

10. Procédé de détection selon l'une des revendications 8 ou 9, **caractérisé en ce que** les mesures ne sont réalisées que lorsque le véhicule roule à une vitesse minimale prédéterminée, étant supposé alors que le véhicule roule en marche avant.

## Claims

1. A device for detecting the position of a wheel (2) on a vehicle, especially a vehicle equipped with a system for monitoring the pressure of its tyres, **characterised in that** it comprises first and second means (8) capable of measuring an acceleration in a direction (D1, D2) having a component in a vertical plane and **in that** the components in the vertical plane of the measurement directions of the first and second measurement means have an angular offset (α) not equal to 0 degrees or 180 degrees.

2. The detection device according to claim 1, **characterised in that** the measurement directions (D1, D2) of the first and second measurement means both lie in a vertical plane.

3. The detection device according to claim 1 or 2, **characterised in that** the angular offset (α) in the vertical plane of the first and second measurement directions (D1, D2) is between 30 degree and 150 degrees.

4. The detection device according to one of claims 1 to 3, **characterised in that** the first and second means capable of measuring an acceleration are shock sensors (8).

5. The detection device according to one of claims 1 to 4, **characterised in that** the first and second means capable of measuring an acceleration are placed on the same support (10).

6. A pressure sensor of a tyre pressure monitoring system, comprising an integrated circuit board (10) supporting various electronic components for measuring pressure and for sending information via electromagnetic waves, **characterised in that** it furthermore includes a position detector (4) according to one of claims 1 to 5.

7. The pressure sensor according to claim 6, **characterised in that** the first and second means (8) capable of measuring an acceleration of the detection device are mounted on the printed circuit board (10) of the sensor.

8. A method of detecting the right/left position of a wheel on a vehicle, **characterised in that** it comprises the following steps:
- measurement of a first acceleration and a second acceleration, each in a direction having a component in a vertical plane, the components in the vertical plane of the directions having an angular offset;
- calculation of the phase shift between the signals corresponding to the two accelerations measured;
- determination of the direction of rotation of the wheel according to the phase shift; and
- determination of the position of the wheel relative to the vehicle, the direction of movement of the vehicle also being known.

9. The detection method according to claim 8, **characterised in that** the measurement directions lie in a vertical plane.

10. The detection method according to one of claims 8 or 9, **characterised in that** the measurements are taken only when the vehicle is running at a predetermined minimum speed, it being assumed that the vehicle is moving forward.

## Patentansprüche

1. Vorrichtung zur Positionsbestimmung eines Fahrzeugrads (2), insbesondere eines Fahrzeugs, das mit einem System zum Überwachen des Reifendrucks ausgestattet ist, **dadurch gekennzeichnet, dass** sie erste und zweite Mittel (8) umfasst, die eine Beschleunigung in einer Richtung (R1, R2) messen können, wobei sie eine Komponente in einer senkrechten Ebene aufweisen, und **dadurch**, dass die Komponenten in der senkrechten Ebene der Messrichtungen der ersten und zweiten Messmittel eine deutliche Winkelversetzung (α) von 0° und 180° aufweisen.

2. Vorrichtung zur Bestimmung nach Anspruch 1, **dadurch gekennzeichnet, dass** die Messrichtungen (R1, R2) der ersten und zweiten Messmittel sich beide in einer senkrechten Ebene befinden.

3. Vorrichtung zur Bestimmung nach einem der Ansprüche 1 oder 2, **dadurch gekennzeichnet, dass** die Winkelversetzung (α) in der vertikalen Ebene der ersten und zweiten Messrichtungen (R1, R2) zwischen 30° und 150° liegt.

4. Vorrichtung zur Bestimmung nach einem der Ansprüche 1 bis 3, **dadurch gekennzeichnet, dass** die ersten und zweiten Mittel, die eine Beschleunigung messen können, Aufprallsensoren (8) sind.

5. Vorrichtung zur Bestimmung nach einem der Ansprüche 1 bis 4, **dadurch gekennzeichnet, dass** die ersten und zweiten Mittel, die eine Beschleunigung messen können, auf einem gleichen Träger (10) angeordnet sind.

6. Drucksensor eines Systems zum Überwachen des Reifendrucks, umfassend eine Platte eines integrierten Schaltkreises (10), der verschiedene elektronische Komponenten für das Messen eines Drucks und das Senden von Informationen mittels elektromagnetischer Wellen trägt, **dadurch gekennzeichnet, dass** er außerdem einen Positionssensor (4) nach einem der Ansprüche 1 bis 5 umfasst.

7. Drucksensor nach Anspruch 6, **dadurch gekennzeichnet, dass** die ersten und zweiten Mittel (8) der Vorrichtung zur Bestimmung, die eine Beschleunigung messen können, auf der Platte der gedruckten Schaltung (10) des Sensors montiert sind.

8. Verfahren zur Bestimmung der Position rechts/links eines Fahrzeugrads, **dadurch gekennzeichnet, dass** es die folgenden Schritte umfasst:
- Messen einer ersten und zweiten Beschleunigung, jede davon in einer Richtung, die eine Komponente auf einer senkrechten Ebene aufweist, wobei die Komponenten auf der senkrechten Ebene der Richtungen eine Winkelversetzung aufweisen,
- Berechnen der Phasenverschiebung zwischen den Signalen, die den beiden gemessenen Beschleunigungen entsprechen,
- Bestimmen der Drehrichtung des Rads in Abhängigkeit von der Phasenverschiebung, und
- Bestimmen der Lokalisierung des Rads im Verhältnis zum Fahrzeug, wobei die Fahrtrichtung des Fahrzeugs außerdem bekannt ist.

9. Verfahren zur Bestimmung nach Anspruch 8, **dadurch gekennzeichnet, dass** die Messrichtungen in einer senkrechten Ebene angeordnet sind.

10. Verfahren zur Bestimmung nach einem der Ansprüche 8 oder 9, **dadurch gekennzeichnet, dass** die Messungen nur dann ausgeführt werden, wenn das Fahrzeug mit einer minimalen vorbestimmten Geschwindigkeit fährt, wobei dann angenommen wird, dass das Fahrzeug vorwärts fährt.
